# EUROPEAN PATENT SPECIFICATION

(11) **EP 2 949 153 B1**
(45) Date of publication and mention of the grant of the patent: **04.08.2021**
(21) Application number: 13704561.3
(22) Date of filing: 28.01.2013
(51) Int. Cl.: H04W 36/00, H04W 36/24

(54) **METHODS AND APPARATUS FOR TRANSMITTING HANDOVER INFORMATION**
VERFAHREN UND VORRICHTUNGEN ZUR ÜBERTRAGUNG VON WEITERLEITUNGSINFORMATIONEN
PROCÉDÉS ET APPAREILS D'ÉMISSION D'INFORMATIONS DE TRANSFERT

(43) Date of publication of application: 02.12.2015
(73) Proprietor: Huawei Technologies Co., Ltd., Longgang District Shenzhen, Guangdong 518129 (CN)
(72) Inventor: OLOFSSON, Henrik, S-930 15 Burea (SE); JI, Li, S-16440 Kista (SE); ZHOU, Guohua, S-16440 Kista (SE)
(74) Representative: Thun, Clemens
(86) International application number: PCT/EP2013/051560
(87) International publication number: WO 2014/114356

(56) References cited:
- WO-A1-2011/006022
- US-A1- 2010 173 626
- US-A1- 2010 273 487
- US-A1- 2012 039 305
- NOKIA SIEMENS NETWORKS: "Discussion on the focus of the Mobility Robustness Optimization", 3GPP DRAFT; R3-090886 SON_MOBILITYROBUSTNESS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Seoul, Korea; 20090318, 18 March 2009 (2009-03-18), XP050341255, [retrieved on 2009-03-18]
- None

## Description

### Technical Field

The present invention relates to methods in a first and a second network control nodes, a computer program, a computer program product, and first and second network control node devices.

### Background of the Invention

Normally a UE in active mode in a cellular wireless network is handed over from one cell to another cell as it moves through the radio network, and data can be transmitted and received without significant interruptions due to these handovers.

The handover (HO) procedure can consist of many steps. In most cellular wireless systems the handover is:
1) network controlled, i.e. the UE is commanded by the network when to connect to another cell;
2) prepared, i.e. the target cell (the cell that UE is moving to) is prepared; and
3) UE assisted, i.e. the UE provides measurement reports before handover, to the serving cell to assist the decision to do handover preparation of target cell(s), and when to leave the serving cell/connect to the target cell.

In the context of handover, the serving cell before HO is often referred to as the source cell. After successful HO the target cell becomes the new serving cell. In LTE the handover is a "hard handover", i.e. the UE radio link is switched from one cell (source) to another (target). In UMTS hard handovers are used exclusively for TDD mode and may be used for FDD mode too.

In the following discussion the focus is on the intra frequency LTE (or E-UTRAN) HO procedure, but the procedures are similar for the LTE Inter RAT and LTE inter frequency HO procedures. The intra E-UTRAN mobility in RRC CONNECTED state is UE assisted network controlled handover, with handover preparation signalling in E-UTRAN.

The handover is initially triggered by a measurement report sent from the UE to the serving eNB. The serving eNB configures how the UE shall take measurements ("Measurement Control") and under what conditions a measurement report shall be triggered and sent to the eNB.

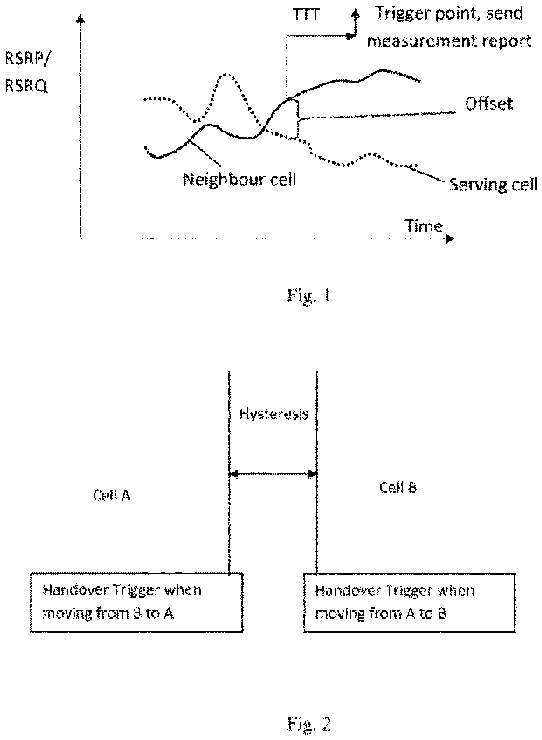

To assist mobility control decisions, the UE can measure several cells and report the results to the network. Different networks and network deployments can have different detailed behaviour, but in most networks it is natural to trigger handover when signal reception from a target cell is better than from the source cell, see figure 1. Since the radio environment is varying rapidly, a time-to-trigger (TTT) is also often used when triggering measurements to assure that the target cell is better during the TTT period.

For the case of intra-frequency HO in a reuse-one system (source cell and target cell uses exactly the same frequency resources) there are strong interference management benefits in keeping the UE always connected to the best cell. In the measurement report the UE includes the reason for the trigger (e.g. target cell stronger than serving cell) and measurements of the reference signal strength (RSRP) or quality (RSRQ) of the serving cell and several neighbours (including the target cell).

To reduce ping-pong effects where a UE is repeatedly handed over between two cells a handover offset is often added to the trigger condition in the two involved cells: the trigger condition in the target cell (in the event of moving back to source cell) should be better than the trigger condition in the serving cell (when moving to the target cell) by the offset (offset >0 dB). This offset is often called handover hysteresis.

When the serving eNB receives a measurement report and if it desires to handover the UE to another cell it performs a handover preparation to that cell. Handover preparation involves a signalling exchange between one eNB and another. This message is called Handover Request in 3GPP LTE systems.

The source cell requests the handover (Handover Request) and passes over UE context information; the target cell decides if it can admit the UE (Call Admission Control) and either accepts or rejects the handover. In the acceptance message (Handover Request Ack.) the target cell includes parameters required by the UE to allow it to communicate to the target cell - these parameters are grouped into a transparent container.

Following a successful preparation, the handover execution takes place. The source cell issues the HO Command to the UE - this is the RRCConnectionReconfiguration message and carries the transparent container. If and when the UE receives this correctly it synchronises to the new target cell and sends a synchronisation message on the RACH. The target cell then issues an allocation to the UE so that it can send a HO Confirmation message to the target cell (the RRCConnectionReconfigurationComplete message).

The handling of UE mobility (as described above) is generally considered as one part of the Radio Resource Management (RRM) functionalities. LTE is using a flat architecture, with RRM located in each eNB, i.e. distributed in the system. Although this has many advantages, it has at least one limitation. It means that the knowledge used for RRM is rather local (limited to the few cells handled by the same eNB). Therefore, a solution called UE History has been included in LTE and UMTS. This solution transfers information between control nodes during handover. This is for example included in the handover request in LTE. The UE History includes a list of last visited cells (up to 16), the stay time in each cell and the cause for each handover. By using this information, it is possible to get an understanding of the history for the UE also when the UE was connected to cells handled by other eNBs.

In 3GPP there has been considerable study into Self-Organising Networks (SON) for LTE. One part of this is the Handover Parameter Optimisation aka Mobility Robustness Optimisation (MRO) which is aiming at optimising mobility parameters. MRO is expected to optimize the parameters to a) meet a specified handover failure rate target, and b) minimize the number of handover events whilst meeting this target value. Many studies have shown that handover failure rate reduction and handover count reduction are contradictory requirements; if the failure rate is reduced the handover count increases, and vice versa. Requirements a) and b) above reflect the fact that meeting the failure rate is of higher priority. A typical failure rate target would be 1 %; MRO should not engineer a failure rate below the target because this will cause more handovers than if the failure rate was equal to the target value.

Another part of SON is the Mobility Load Balancing (MLB) which is aiming at balancing the load between neighbour cells in the network. If the cells are operating at the same frequency, the load balancing is performed by adjusting the mobility parameters. The handover is triggered either later or earlier, thereby effectively shrinking or enlarging the cell. One small drawback of using load balancing is that the UE is no longer connected to the best cell from radio point of view (the closest cell). This is most problematic for the uplink, since the UE will need to transmit with a higher power to reach the new cell, and this added power will increase the interference in the uplink channel. MLB is therefore not typically useful to reduce an overloaded uplink channel.

While balancing the load, it is important that the requirements a) and b) above are still met. This requires coordination between the involved eNBs. This coordination typically has the target to maintain the desired handover hysteresis. This coordination may also be used by the MRO algorithm.

For this coordination, it is specified that the eNB shall negotiate changes to the handover trigger. The handover trigger is specified as "the cell specific offset that corresponds to the threshold at which a cell initializes the handover preparation procedure". It should be noted that this is not a one to one mapping to the configuration of the UE measurements. Normally, the eNB configures the UE measurements to trigger a report when a handover is desired, where this configuration contains thresholds in the power domain and in the time domain (TTT),_but it was seen beneficial to not exchange the configuration of UE measurements but rather the more abstract handover trigger which reflects when the eNB trigger a handover instead of when the UE triggers a measurement report. The reason for this is in order not to limit the handover algorithms in the participating eNBs. The handover algorithms in the eNBs are thereby free to choose the desired measurement configuration, using the different power domain thresholds and the time domain threshold. The eNB is responsible for setting the UE configuration in order to achieve the desired handover trigger.

The negotiation is limited to changes of the handover trigger and hence not related to absolute values of this handover trigger. This negotiation is described as the Mobility Settings Change Procedure in the specification. This procedure coordinates the handover trigger per cell relationship and uses the following messages:
- MOBILITY CHANGE REQUEST
- MOBILITY CHANGE ACKNOWLEDGE
- MOBILITY CHANGE FAILURE

The content of the MOBILITY CHANGE REQUEST message is as follows:
- eNB1 Cell ID - The identity of the cell sending this message;
- eNB2 Cell ID - The identity of the cell sending this message;
- eNB1 Mobility Parameters - The change of handover trigger employed in eNB1 (optional);
- eNB2 Proposed Mobility Parameters - The proposed change of the handover trigger in eNB2;
- Cause - This indicates whether the coordination is triggered by MRO or MLB.

As seen above, the sender (eNB1 in this case) suggests a change in the handover trigger in the receiver (eNB2 in this case). The eNB1 may or may not tell the eNB2 how eNB1 intends to adjust its own handover trigger. If this handover trigger is not provided one possible interpretation is that the eNB2 assumes that the eNB1 is performing a similar adjustment to its own parameters. Another interpretation is that the eNB2 assumes that the eNB1 is not performing any adjustment.

The eNB receiving this message may respond with either a MOBILITY CHANGE ACKNOWLEDGE message, which indicates that the proposed changes are accepted, or a MOBILITY CHANGE FAILURE message which indicates that the proposed changes are not accepted. In case the changes are not accepted, the message can also include the range for acceptable changes.

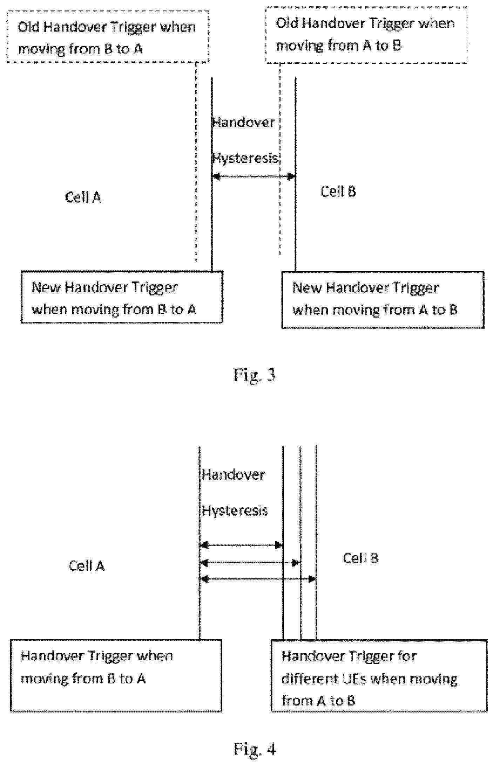

An example of this coordination is depicted in the appended figures. Figure 2 shows the relationship between the handover triggers used in each cell and the handover hysteresis and Figure 3 shows how the negotiation of the handover trigger can result in a coordinated change with a preserved handover hysteresis. It should be noted that in some cases, the eNBs may deliberately choose to reduce or increase the handover hysteresis. This can be achieved by not performing the same adjustment in both cells.

According to a prior art solution it is proposed to include the optimal operating parameters of the mobile radio stations and/or at least one of the participating base stations (eNBs) in handover request. These parameters are listed as predefined upper and/or lower absolute values of the reception and/or transmission field intensity values. Also more general RRM parameters that are set in the mobile station (UE) is described. The main problem with this solution is that this solution is not in line with the current solution for MLB where handover triggers are used. It is not possible to translate from measurement configuration in the UE to the handover trigger since the handover trigger reflects when the actual decision is taken by the eNB rather than when the report is sent from the UE. One example of this is that the eNB may choose to configure the UE to send reports a bit earlier, in order to collect information about surrounding cells well in time before the actual handover.

In many scenarios, it may be beneficial to treat different users differently. If MLB is used, it may be desirable to trigger handover for some users. Known examples of this include:
- Depending on total bandwidth usage;
- Depending on uplink or downlink bandwidth usage;
- Depending on the services that are currently used, e.g. guaranteed bit rate services like voice or video or non-guaranteed bit rate services such as web browsing;
- Depending on the UE capabilities, e.g. whether it supports MIMO or schemes for enhanced interference management (eICIC).

This user differentiation is currently supported for MRO, by giving the analyzing eNB the possibility to retrieve stored information for every reported failure. This is achieved by including different identifiers in the failure reports transmitted from the UE after failure and also between different eNBs. Hence it is possible for the eNB to identify what parameters (for example handover trigger) that was used for a certain UE at the time of failure.

But this is not possible for MLB since the coordination of handover triggers between eNBs currently only supports the usage of one single handover trigger applicable to all UEs. Therefore, it is not possible to coordinate the usage of different handover triggers for different UEs. This is depicted in Figure 4 where the usage of different handover triggers for different UEs in cell A creates a different handover hysteresis for these different UEs.

As an alternative solution to this problem, it would be possible to coordinate the handover trigger to maintain a minimum handover hysteresis setting, thereby trying to minimize the number of ping-pongs. This would mean that an unnecessary large handover hysteresis is used for some UEs. This would minimize the number of ping-pongs but would on the other hand reduce the possibility to do efficient load balancing. Similarly, it would be possible to do the opposite and try to control the maximum handover hysteresis setting which would increase the possibility for load balancing but instead lead to a large number of ping-pongs. Therefore the alternative solutions will not completely solve the identified problem.

In addition to the above mentioned coordination, it is also important that the negotiated handover trigger with different neighbouring cells is coordinated. This can be explained with an example. Assume a scenario with three cells (A, B, and C). Even if the handover trigger is carefully negotiated between the pairs (A, B), (B, C) and (C, A) where each pair indicates the source and the target cell, a rapid HO loop between A->B->C->A->B->...can still be encountered. When the UE moves from cell A to cell B, the UE is handed over to B. Since the handover trigger is coordinated with A, the UE will not immediately be handed back to A. But cell B may be configured to handover the UE to cell C in an attempt to reduce the load in cell B. The UE will not be handed back to cell B since the handover trigger is coordinated. But it may be further handed over to cell A, and the UE may then be immediately handed over to B. This problem is normally solved by limiting the allowed differences in handover trigger negotiated between one cell and its different neighbour cells.

For example, US 2010/0173626A1 refers to handover parameter settings automatically adapted in access points in a system to improve handover performance. Reactive detection techniques are employed for identifying different types of handover-related failures and adapting handover parameters based on this detection. Messaging schemes are also employed for providing handover-related information to access points. Proactive detection techniques also may be used for identifying conditions that may lead to handover-related failures and then adapting handover parameters in an attempt to prevent such handover-related failures. Ping-ponging may be mitigated by adapting handover parameters based on analysis of access terminal visited cell history acquired by access points in the system. In addition, configurable parameters (e.g., timer values) may be used to detect handover-related failures.

Further, US 2010/0273487A1 refers to a method and apparatus for use in a cellular radio communication system for adjusting a handover parameter. Information is collected regarding actual handovers that have occurred between one or more pairs of cells as well as handover failures. The collected handover information is processed to determine a handover oscillation rate or a handover cost associated with the cell pair. If the handover performance is determined to be acceptable, the determined handover oscillation rate or the determined handover cost is compared with a predetermined target handover oscillation rate or a predetermined target handover cost, respectively. One or more handover parameters associated with at least one of the cells in the cell pair is adjusted based on the comparison.

### Summary of the Invention

An object of the present invention is to provide a solution which mitigates or solves the drawbacks and problems of prior art solutions.

The present invention is defined by the independent claims. Embodiments labelled as inventive embodiments in the following, which are not covered by the scope of protection defined by the independent claims, are to be understood as examples helpful for understanding the invention but not as embodiments of the invention.

The present invention provides a solution which mitigate or solves the problems of prior art. By providing means for using different mobility settings for different mobile stations while still informing the target network control node (associated with the target cell) about which handover trigger that was used for a handover negative effects such as ping-pong may be avoided or mitigated.

Further applications and advantages of the invention will be apparent from the following detailed description.

### Brief Description of the Drawings

The appended drawings are intended to clarify and explain different embodiments of the present invention in which:
- Fig. 1 illustrates a typical two-cell scenario for mobility measurements;
- Fig. 2 illustrates the relationship between handover trigger and handover hysteresis;
- Fig. 3 illustrates the coordination of handover trigger change to preserve handover hysteresis;
- Fig. 4 illustrates the usage of different handover triggers for different mobile stations (UEs) in cell A;
- Fig. 5 illustrates an embodiment of the present invention; and
- Fig. 6 illustrates another embodiment of the present invention.

### Detailed Description of the Invention

To achieve the aforementioned and further objects, the present invention relates to a method for transmitting information in a cellular wireless communication, such as a 3GPP communication system. The cellular system comprises cells with associated network control nodes arranged to control the associated cell(s). When mobile stations are moving in the cellular system a handover method in which at least one handover trigger associated with handovers from a first cell to another second cell, or vice versa, are negotiated between a first network control node associated with the first cell and a second network control node associated with the second cell. The present method comprises the step of transmitting a handover request message from the first network control node to the second network control node, wherein the handover request message includes information about which handover trigger that was used in at least one first handover from the first cell to the second cell.

Thereby the present method provides means for using different mobility settings (handover triggers) for different mobile stations while still informing the target network control node (associated with the target cell) about which handover trigger was used. Hence, any negative impacts from using the differentiated handover trigger, such as ping-pong effects, can be solved or mitigated.

It should be realised that the above mentioned handover method may use different handover triggers for different mobile stations according to an embodiment of the invention.

The following detailed description of preferred embodiments of the present invention is presented in a 3GPP LTE communication system context. The present invention is however not limited to such systems only but may be implemented in any suitable cellular wireless communication system.

According to an embodiment of the invention a difference value Δ between a first negotiated handover trigger and the actual handover trigger used for the handover that is prepared is comprised in the handover request message for handovers from the first cell to the second cell. This means that the existing solution of negotiating one single handover trigger for each cell between two eNBs handling two cells in the Mobility Settings Change procedure can be fully re-used. The eNB handling the target cell can therefore apply the same difference to the handover trigger used in the reverse direction. This embodiment may also involve the step that a second handover trigger is negotiated between the first and second network control nodes. The second handover trigger is used together with the difference value Δ in handovers from the second cell to the first cell, i.e. in the reverse direction. One advantage of this embodiment is that it requires the smallest changes to the existing handover solutions.

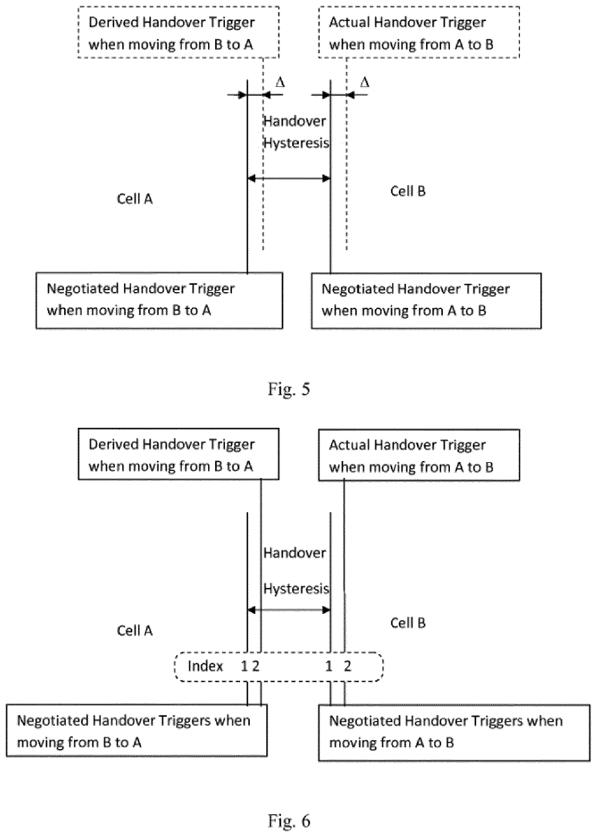

An example of the above embodiment is illustrated in Figure 5. In this example, the UE is moving from cell A to cell B. The difference value (Δ) between the negotiated handover trigger and the actually used handover trigger (signalled in the handover request message) is used to derive the suitable handover trigger in the event of moving back to cell A.

According to another embodiment of the invention the information indicates a plurality of difference values Δ associated with a number of previous handovers for a specific mobile station. Preferably, the information further indicates the accumulated negotiated change of the first handover trigger and/or the second handover trigger. Therefore, the mentioned difference value between the negotiated and the actually used handover trigger may be included in the UE history which already contains a list of last visited cells. This would mean that the receiving network control node (eNB) understand not only the difference in the last handover but also the difference in the last visited cells. This may be important in order to avoid the fast loops of handovers as described in the previous description, since this enables the target cell to understand large differences between the actually used handover trigger compared to the negotiated handover trigger.

An extension to the above described embodiment is to also include the accumulated negotiated change of the handover trigger in the UE history. This may be important in order not to know only the difference between the negotiated value and the value that was used for all cells in the UE history, but also for understanding in what way the negotiation has been performed, and whether the negotiation itself has created a large difference between the handover triggers used for the neighbour cells in the UE history. Including the accumulated negotiated change value would give a more complete view on what handover trigger was used.

According to yet another embodiment of the invention the Mobility Settings Change procedure is improved to support the negotiation of multiple handover triggers. Hence, a first plurality of handover triggers is negotiated between the first network control node and the second network control node for handovers from the first cell to the second cell. In this embodiment the information indicates one of the first plurality of handover trigger as the handover trigger used in a handover from the first cell to the second cell. Further, a second plurality of handover triggers may be negotiated between the first network control node and the second network control node for handovers from the second cell to the first cell. In this case the information further indicates one of the second plurality handover triggers to be used for handovers from the second cell to the first cell.

An extension of the above method is that the negotiation further involves exchanging at least one index value and an associated corresponding adjustment value for identifying and changing a handover trigger belonging to the first or the second plurality of handover triggers. For example, each MOBILITY CHANGE REQUEST message could include an additional index, or a group identity, identifying one of several negotiated thresholds. In this solution, one message would be used to modify one handover trigger identified by this index. Some example extensions of this solution could be to:
- Include multiple index values to allow the same change to multiple thresholds;
- Include multiple change values associated with one or more index values, thereby allowing different changes to different groups of thresholds.

Yet another alternative would be to define an allowed range of handover triggers (for example upper value, lower value and number of intermediate points), where each handover trigger can be identified with an index. The negotiation could then be performed by negotiating the range values (upper, lower) instead of addressing the specific handover trigger values. One example of this is to increase the upper value, which would result in a new range with a maintained lower value and number of intermediates points.

By modifying the negotiation as illustrated above, the handover request message can then contain information to identify which one of a plurality of handover triggers that was used in the associated handover. This index can alternatively be included in the UE history in a similar way as described above. One example usage of such an index would be to divide the UEs into different groups, each group using different indices. The index could therefore also be interpreted as a group identity, where the index or group identity both identify a group of UEs as well as the handover trigger that is used for UEs belonging to this particular group.

With reference to the embodiments described above, when the UE is moving from cell A (first cell) to cell B (second cell), the solution can be illustrated as in Figure 6. The two eNBs handling (controlling) the two cells have negotiated two handover triggers with index 1 and 2. The index identifying which handover trigger should be used (value=2) is signalled in the handover request message. The node handling cell B can therefore derive which handover trigger to be used in the event of moving back to cell A.

In this solution, it is assumed that the target eNB can use the index to identify which handover trigger to use in case a handover in the reverse direction. But this solution limits the target cell (cell B in the example above) to only use the same group identity for any handover back to the source cell (Cell A above). It may also use the same group identity (or index) when performing handovers to other cells. Although this solution would mitigate the negative effects (such as ping-pongs) when using differentiated handover triggers there may be strong motivation for changing the group identity, e.g. if the UE velocity or data usage is changed. But allowing rapid changes in group identity would counteract the usage of the presented solution.

Therefore, in yet another embodiment, the same group identity, used in a handover from cell A (first cell) to cell B (second cell), is also used in a successive handover in case both handovers are performed within a specified time period (e.g. with the use of threshold value(s)). This time can be set rather small and targeted at avoiding ping-pong effects. One example for the time period is less than 60 seconds, and preferably less than 30 seconds. The time period value can be predefined in the specifications (e.g. 3GPP), configured in a network control node (e.g. eNB or OMA), or included in the handover request message. The latter solution would provide a possibility to dynamically adjust this time value in the system. It would also be possible to also further limit this by stating that the same group identity shall be used within the specified time period, only if the target cell for the second handover is the same as the source cell of the first handover. In a similar way, the same rules of re-using the last used group identity as discussed above can be applied to the solution signalling a difference value Δ, where the difference value used in a first handover is re-used for a second handover.

According to yet another embodiment a mapping function is used to derive a certain index or group identity. The information used for this mapping be transferred from the source to target eNB in the handover request message, or by other means (for example from the MME, from another network node or from the OAM) in the form of suitable parameters. Example of parameters passed from source eNB to target eNB to enable such mapping are: mobile station velocity, uplink signal measurements, downlink signal measurements, estimated uplink CQI, reported downlink CQI, mobile station capabilities and/or configured usage of said mobile station capabilities. The mapping function can either be undefined (proprietary), predefined (e.g. in a specification), provide by another control node (for example an OAM node) or exchanged between the eNBs. The transferred information (in parametric form) used for the mapping can also be re-used when determining the index or group identity for successive handovers, and the previously mentioned solution of re-using the same group identity used in the first handover for successive handovers in case the time between handovers are less than a specified time period can also be used.

The present method in a cellular system may further comprise the step of receiving, by the second network control node, the information, and preferably using the information in at least one handover from the second cell (cell B) to the first cell (cell A).

Moreover, the present invention also relates to a method in a first network control node (transmitter) and a corresponding method in a second control node (receiver). The method in the first network control node comprises the step of transmitting a handover request message to a second network control node. The handover request message includes information about which handover trigger that was used in at least one first handover from a first cell associated with the first network control node to a second cell associated with the second network control node. The corresponding method in the second network control node comprises the step of receiving the handover request message from the first network control node; and may further comprise the step of using the information in at least one second handover from the second cell to the first cell.

Further, the methods above may be implemented in a first network control node device and a second network control node device. The devices are arrange for controlling one or more cells of a cellular system, and may therefore include suitable memory means, processing means, receiving means, transmitting means, controlling means, input means, output means, interface means, protocol means, etc. An example of such a device is a radio base station.

It should be realised that the methods in the first network control node and the corresponding method in the second control node may be modified, *mutatis mutandis,* according to all embodiments of the method in the cellular system. This is also true for the first network control node device and the second network control node device.

Preferably, according to yet another embodiment of the invention the cellular wireless system is a 3GPP system which means that the network control nodes are eNBs and mobile stations are UEs.

Furthermore, as understood by the person skilled in the art, any method according to the present invention may also be implemented in a computer program, having code means, which when run by processing means causes the processing means to execute the steps of the method. The computer program is included in a computer readable medium of a computer program product. The computer readable medium may comprises of essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Finally, it should be understood that the present invention is not limited to the embodiments described above, but also relates to and incorporates all embodiments within the scope of the appended independent claims.

## Claims

1. Method for transmitting information in a cellular wireless communication system performed by a first network control node in the cellular wireless communication system, wherein the cellular wireless communication system comprises one or more mobile stations, a first cell associated with the first network control node and a second cell associated with a second network control node, said method comprising the step of:
• negotiating a first plurality of handover triggers with the second network control node for handovers from the first cell to the second cell,
• transmitting a handover request message to the second network control node, wherein said handover request message includes information indicating which handover trigger among the first plurality of handover triggers was used in a first handover among the handovers from the first cell to the second cell, and
the information is in the form of one or more parameters selected from the group comprising: mobile station velocity, uplink signal measurements, downlink signal measurements, estimated uplink CQI, and reported downlink CQI, and one or more of said parameters are used as an input to a mapping function for obtaining an index associated with said handover trigger used in said first handover from said first cell to said second cell.

2. Method according to claim 1, further comprising negotiating a second plurality of handover triggers with the second network control node for handovers from the second cell to the first cell, and said information further indicates one of said second plurality handover triggers to be used for handovers from the second cell to the first cell.

3. Method according to claim 1 or 2, wherein said negotiation further involves exchanging with the second network control node at least one index value and an associated corresponding adjustment value for identifying and changing a handover trigger belonging to the first or the second plurality of handover triggers.

4. Method according to claim 3, wherein said negotiation further involves exchanging with the second network control node at least one range parameter defining an allowed range for the first or second plurality of handover triggers.

5. Method according to claim 4, wherein said range parameter defines an upper value, a lower value or a number of intermediate values for said allowed range.

6. Method according to claim 1, wherein the information is an index associated with the handover trigger used in the first handover from the first cell to the second cell.

7. Method according to claim 1, wherein said information is further used in a second handover, said second handover being performed a predetermined time period after said first handover.

8. Method according to claim 7, wherein said predetermined time period is less than 60 seconds.

9. Method according to claim 7, wherein said predetermined time period is configured by a network control node, included in said handover request message, or predefined.

10. Method according to claim 7, wherein said second handover is a handover from the second cell to the first cell.

11. Method according to claim 1, wherein said handover method uses different handover triggers for different mobile stations.

12. Method according to claim 1, wherein said cellular wireless communication system is a 3GPP wireless communication system, such as LTE and LTE Advanced.

13. Method for receiving information in a wireless communication system performed by a second network control node of the cellular wireless communication system, wherein the cellular wireless communication system comprises one or more mobile stations, a first cell associated with a first network control node and a second cell associated with said second network control node, said method comprising the steps of:
• negotiating a plurality of handover triggers with the first network control node for handovers from the first cell to the second cell,
• receiving a handover request message from said first network control node, said handover request message including information indicating which handover trigger among the plurality of handover triggers was used in a first handover from the first cell to the second cell, wherein the information is in the form of one or more parameters selected from the group comprising: mobile station velocity, uplink signal measurements, downlink signal measurements, estimated uplink CQI, and reported downlink CQI, and one or more of said parameters are used as an input to a mapping function for obtaining an index associated with said handover trigger used in said first handover from said first cell to said second cell
• using said information in a second handover from the second cell to the first cell.

14. Computer program, **characterised in** comprising code means, which when run by processing means causes said processing means to execute said method according to any of claims 1-13.

15. Computer program product comprising a computer readable medium and a computer program according to claim 14, wherein said computer program is included in the computer readable medium, and comprises of one or more from the group: Read-Only Memory, ROM, Programmable ROM, PROM, Erasable PROM, EPROM, Flash memory, Electrically EPROM, EEPROM, and hard disk drive.

16. First network control node device configured to perform any of the methods according to claims 1 - 12.

17. Second network control node device configured and intended to perform any of the methods according to claims 13 - 14.

## Patentansprüche

1. Verfahren zum Übertragen von Informationen in einem zellularen Drahtloskommunikationssystem, das von einem ersten Netzwerksteuerknoten in dem zellularen Drahtloskommunikationssystem durchgeführt wird, wobei das zellulare Drahtloskommunikationssystem eine oder mehrere Mobilstationen, eine erste Zelle, die dem ersten Netzwerksteuerknoten zugeordnet ist, und eine zweite Zelle, die einem zweiten Netzwerksteuerknoten zugeordnet ist, umfasst, wobei das Verfahren die folgenden Schritte umfasst:
• Aushandeln einer ersten Vielzahl von Handover-Triggern mit dem zweiten Netzwerksteuerknoten für Handover von der ersten Zelle zur zweiten Zelle,
• Übertragen einer Handover-Anforderungsnachricht an den zweiten Netzwerksteuerknoten, wobei die Handover-Anforderungsnachricht Informationen enthält, die angeben, welcher Handover-Trigger aus der ersten Vielzahl von Handover-Triggern in einem ersten Handover unter den Handovern von der ersten Zelle zu der zweiten Zelle verwendet wurde, und
die Information in Form eines oder mehrerer Parameter vorliegt, die aus der Gruppe ausgewählt sind, die Folgendes umfasst: Geschwindigkeit der Mobilstation, Uplink-Signalmessungen, Downlink-Signalmessungen, geschätzter Uplink-CQI und gemeldeter Downlink-CQI, und einer oder mehrere der Parameter als Eingabe für eine Abbildungsfunktion verwendet werden, um einen Index zu erhalten, der mit dem Handover-Trigger verknüpft ist, der bei dem ersten Handover von der ersten Zelle zu der zweiten Zelle verwendet wird.

2. Verfahren nach Anspruch 1, das ferner das Aushandeln einer zweiten Vielzahl von Handover-Triggern mit dem zweiten Netzwerksteuerknoten für Handover von der zweiten Zelle zur ersten Zelle umfasst, und die Informationen ferner einen der zweiten Vielzahl von Handover-Triggern angeben, der für Handover von der zweiten Zelle zur ersten Zelle zu verwenden ist.

3. Verfahren nach Anspruch 1 oder 2, wobei die Aushandlung ferner den Austausch von mindestens einem Indexwert und einem zugehörigen entsprechenden Einstellwert mit dem zweiten Netzwerksteuerknoten umfasst, um einen Handover-Trigger zu identifizieren und zu ändern, der zu der ersten oder der zweiten Vielzahl von Handover-Triggern gehört.

4. Verfahren nach Anspruch 3, wobei die Aushandlung ferner den Austausch von mindestens einem Bereichsparameter, der einen zulässigen Bereich für die erste oder zweite Vielzahl von Handover-Triggern definiert, mit dem zweiten Netzwerksteuerknoten umfasst.

5. Verfahren nach Anspruch 4, wobei der Bereichsparameter einen oberen Wert, einen unteren Wert oder eine Anzahl von Zwischenwerten für den erlaubten Bereich definiert.

6. Verfahren nach Anspruch 1, wobei die Information ein Index ist, der mit dem Handover-Trigger verbunden ist, der bei dem ersten Handover von der ersten Zelle zur zweiten Zelle verwendet wird.

7. Verfahren nach Anspruch 1, wobei die Information ferner in einem zweiten Handover verwendet wird, wobei das zweite Handover eine vorbestimmte Zeitspanne nach dem ersten Handover durchgeführt wird.

8. Verfahren nach Anspruch 7, wobei die vorbestimmte Zeitspanne weniger als 60 Sekunden beträgt.

9. Verfahren nach Anspruch 7, wobei die vorgegebene Zeitspanne von einem Netzwerksteuerknoten konfiguriert wird und in der Handover-Anforderungsnachricht enthalten oder vordefiniert ist.

10. Verfahren nach Anspruch 7, wobei der zweite Handover ein Handover von der zweiten Zelle zur ersten Zelle ist.

11. Verfahren nach Anspruch 1, wobei das Handover-Verfahren unterschiedliche Handover-Trigger für unterschiedliche Mobilstationen verwendet.

12. Verfahren nach Anspruch 1, wobei das zellulare Drahtloskommunikationssystem ein 3GPP-Drahtloskommunikationssystem ist, wie z. B. LTE und LTE Advanced.

13. Verfahren zum Empfangen von Informationen in einem Drahtloskommunikationssystem, das von einem zweiten Netzwerksteuerknoten des zellularen Drahtloskommunikationssystems durchgeführt wird, wobei das zellulare Drahtloskommunikationssystem eine oder mehrere Mobilstationen, eine erste Zelle, die dem ersten Netzwerksteuerknoten zugeordnet ist, und eine zweite Zelle, die dem zweiten Netzwerksteuerknoten zugeordnet ist, umfasst, wobei das Verfahren die folgenden Schritte umfasst:
• Aushandeln einer Vielzahl von Handover-Triggern mit dem ersten Netzwerksteuerknoten für Handover von der ersten Zelle zur zweiten Zelle,
• Empfangen einer Handover-Anforderungsnachricht von dem ersten Netzwerksteuerknoten, wobei die Handover-Anforderungsnachricht Informationen enthält, die angeben, welcher Handover-Trigger aus der Vielzahl von Handover-Triggern bei einem ersten Handover von der ersten Zelle zu der zweiten Zelle verwendet wurde, wobei die Informationen in Form eines oder mehrerer Parameter vorliegen, die aus der Gruppe ausgewählt sind, die Folgendes umfasst: Geschwindigkeit der Mobilstation, Uplink-Signalmessungen, Downlink-Signalmessungen, geschätzter Uplink-CQI und gemeldeter Downlink-CQI, und einer oder mehrere der Parameter als eine Eingabe für eine Abbildungsfunktion zum Erhalten eines Index verwendet werden, der mit dem Handover-Trigger verbunden ist, der in dem ersten Handover von der ersten Zelle zu der zweiten Zelle verwendet wurde
• Verwenden dieser Informationen bei einem zweiten Handover von der zweiten Zelle zur ersten Zelle.

14. Computerprogramm, **dadurch gekennzeichnet, dass** es eine Codeeinrichtung umfasst, die, wenn sie von einer Verarbeitungseinrichtung ausgeführt wird, die Verarbeitungseinrichtung veranlasst, das Verfahren nach einem der Ansprüche 1-13 auszuführen.

15. Computerprogrammprodukt, das ein computerlesbares Medium und ein Computerprogramm nach Anspruch 14 umfasst, wobei das Computerprogramm in dem computerlesbaren Medium enthalten ist und eines oder mehrere aus der Gruppe umfasst: Read-Only Memory (ROM), "Programmable" ROM (PROM), "Erasable" PROM (EPROM), Flash-Speicher, "Electrically" EPROM (EEPROM) und Festplattenlaufwerk.

16. Erste Netzwerksteuerknotenvorrichtung, die dazu ausgelegt ist, eines der Verfahren nach den Ansprüchen 1-12 durchzuführen.

17. Zweite Netzwerksteuerknotenvorrichtung, die dazu ausgelegt ist, eines der Verfahren nach den Ansprüchen 13-14 durchzuführen.

## Revendications

1. Procédé de transmission d'informations dans un système de communication cellulaire sans fil exécuté par un premier nœud de commande de réseau dans le système de communication cellulaire sans fil, dans lequel le système de communication cellulaire sans fil comprend une ou plusieurs stations mobiles, une première cellule associée au premier nœud de commande de réseau et une seconde cellule associée à un second nœud de commande de réseau, ledit procédé comprenant les étapes consistant à :
- négocier une première pluralité de déclencheurs de transfert avec le second nœud de commande de réseau pour des transferts de la première cellule à la seconde cellule,
- transmettre un message de demande de transfert au second nœud de commande de réseau, dans lequel ledit message de demande de transfert comprend des informations indiquant quel déclencheur de transfert parmi la première pluralité de déclencheurs de transfert a été utilisé dans un premier transfert parmi les transferts de la première cellule à la seconde cellule, et
les informations sont sous la forme d'un ou plusieurs paramètres choisis dans le groupe comprenant : la vitesse de station mobile, des mesures de signal de liaison montante, des mesures de signal de liaison descendante, le CQI de liaison montante estimé, et le CQI de liaison descendante rapporté, et un ou plusieurs desdits paramètres sont utilisés comme entrée d'une fonction de mappage pour obtenir un index associé audit déclencheur de transfert utilisé dans ledit premier transfert de ladite première cellule à ladite seconde cellule.

2. Procédé selon la revendication 1, comprenant en outre l'étape consistant à négocier une seconde pluralité de déclencheurs de transfert avec le second nœud de commande de réseau pour des transferts de la seconde cellule à la première cellule, et lesdites informations indiquent en outre l'un de ladite seconde pluralité de déclencheurs de transfert à utiliser pour des transferts de la seconde cellule à la première cellule.

3. Procédé selon la revendication 1 ou 2, dans lequel ladite négociation implique en outre d'échanger avec le second nœud de commande de réseau au moins une valeur d'index et une valeur d'ajustement correspondante associée pour identifier et changer un déclencheur de transfert appartenant à la première ou à la seconde pluralité de déclencheurs de transfert.

4. Procédé selon la revendication 3, dans lequel ladite négociation implique en outre d'échanger avec le second nœud de commande de réseau au moins un paramètre de plage définissant une plage autorisée pour la première ou la seconde pluralité de déclenchements de transfert.

5. Procédé selon la revendication 4, dans lequel ledit paramètre de plage définit une valeur supérieure, une valeur inférieure ou un nombre de valeurs intermédiaires pour ladite plage autorisée.

6. Procédé selon la revendication 1, dans lequel les informations sont un index associé au déclencheur de transfert utilisé dans le premier transfert de la première cellule à la seconde cellule.

7. Procédé selon la revendication 1, dans lequel lesdites informations sont en outre utilisées dans un second transfert, ledit second transfert étant effectué dans une période de temps prédéterminée après ledit premier transfert.

8. Procédé selon la revendication 7, dans lequel ladite période de temps prédéterminée est inférieure à 60 secondes.

9. Procédé selon la revendication 7, dans lequel ladite période de temps prédéterminée est configurée par un nœud de commande de réseau, incluse dans ledit message de demande de transfert, ou prédéfinie.

10. Procédé selon la revendication 7, dans lequel ledit second transfert est un transfert de la seconde cellule à la première cellule.

11. Procédé selon la revendication 1, dans lequel ledit procédé de transfert utilise différents déclencheurs de transfert pour différentes stations mobiles.

12. Procédé selon la revendication 1, dans lequel ledit système de communication cellulaire sans fil est un système de communication sans fil 3GPP, tel que LTE et LTE Advanced.

13. Procédé de réception d'informations dans un système de communication sans fil exécuté par un second nœud de commande de réseau du système de communication cellulaire sans fil, dans lequel le système de communication cellulaire sans fil comprend une ou plusieurs stations mobiles, une première cellule associée à un premier nœud de commande de réseau et une seconde cellule associée audit second nœud de commande de réseau,
ledit procédé comprenant les étapes consistant à :
- négocier une pluralité de déclencheurs de transfert avec le premier nœud de commande de réseau pour des transferts de la première cellule à la seconde cellule,
- recevoir un message de demande de transfert à partir dudit premier nœud de commande de réseau, ledit message de demande de transfert comprenant des informations indiquant quel déclencheur de transfert parmi la pluralité de déclencheurs de transfert a été utilisé dans un premier transfert de la première cellule à la seconde cellule, dans lequel les informations sont sous la forme d'un ou plusieurs paramètres sélectionnés dans le groupe comprenant : la vitesse de station mobile, des mesures de signal de liaison montante, des mesures de signal de liaison descendante, le CQI de liaison montante estimé et le CQI de liaison descendante rapporté, et un ou plusieurs desdits paramètres sont utilisés comme entrée d'une fonction de mappage pour obtenir un index associé audit déclencheur de transfert utilisé dans ledit premier transfert de ladite première cellule à ladite seconde cellule
- utiliser lesdites informations dans un second transfert de la seconde cellule à la première cellule.

14. Programme d'ordinateur, **caractérisé en ce qu'**il comprend un moyen de code qui, lorsqu'il est exécuté par un moyen de traitement, amène ledit moyen de traitement à exécuter ledit procédé selon l'une quelconque des revendications 1 à 13.

15. Produit de programme d'ordinateur comprenant un support lisible par ordinateur et un programme d'ordinateur selon la revendication 14, dans lequel ledit programme d'ordinateur est inclus sur le support lisible par ordinateur et comprend un ou plusieurs éléments parmi le groupe suivant : mémoire morte, ROM, ROM programmable, PROM, PROM effaçable, EPROM, mémoire flash, EPROM électrique, EEPROM, et disque dur.

16. Premier dispositif de nœud de commande de réseau configuré pour exécuter l'un quelconque des procédés selon les revendications 1 à 12.

17. Second dispositif de nœud de commande de réseau configuré pour exécuter l'un quelconque des procédés selon les revendications 13 à 14.
